# EUROPÄISCHE PATENTANMELDUNG

(11) **EP 2 407 322 A1**
(43) Veröffentlichungstag der Anmeldung: **18.01.2012**
(21) Anmeldenummer: 11003000.4
(22) Anmeldetag: 08.04.2011
(51) Int. Cl.: B60D 5/00, B61D 17/22, B62D 47/02, B64F 1/305

(54) **Balg**

(30) Priorität: 16.07.2010 EP 10007373
(71) Anmelder: Hübner GmbH, 34123 Kassel (DE)
(72) Erfinder: Karasek, Jens, 34260 Kaufungen (DE); Mosaner, Knud, 34127 Kassel (DE)
(74) Vertreter: Walther, Walther & Hinz GbR

(57) **Zusammenfassung**

Gegenstand der Erfindung ist ein Balg eines Überganges zwischen zwei gelenkig miteinander verbundenen Fahrzeugen oder Balg eines Vordachs einer Fluggasttreppe oder Fluggastbrücke, wobei der Balg aus einem Tuchmaterial hergestellt ist, wobei das Tuchmaterial einen Festigkeitsträger z. B. ein Gewebe, Gewirk oder Gestrick aufweist, wobei der Festigkeitsträger auf zumindest einer Seite mit einem Kunststoff beschichtet ist, wobei der Festigkeitsträger eine Einfärbung aufweist, wobei die Beschichtung aus Kunststoff glasfarbig transluzent ist.

## Beschreibung

Die vorliegende Erfindung betrifft einen Balg eines Übergangs zwischen zwei gelenkig miteinander verbundenen Fahrzeugen oder den Balg eines Vordaches einer Fluggasttreppe oder Fluggastbrücke, wobei der Balg aus einem Tuchmaterial hergestellt ist, wobei das Tuchmaterial einen Festigkeitsträger z. B. ein Gewebe, Gewirk oder Gestrick aufweist, wobei der Festigkeitsträger auf zumindest einer Seite mit einem Kunststoff beschichtet ist.

Bälge als Falten- oder Wellenbälge sind aus dem Stand der Technik seit langem bekannt. Derartige Bälge sind Teil eines Übergangs zwischen zwei gelenkig miteinander verbundener Fahrzeuge, um Personen das Hinüberwechseln von einem Fahrzeugteil in das andere Fahrzeugteil zu ermöglichen, ohne dass diese den Witterungseinflüssen ausgesetzt sind. Solche Bälge finden sich beispielsweise bei Gelenkbussen oder auch bei Schienenfahrzeugen. Darüber hinaus ist die Verwendung von Bälgen als Vordächer von Fluggastbrücken oder Fluggasttreppen bekannt. Für die Herstellung solcher Bälge wird ein mit Kunststoff beschichtetes Tuch, beispielsweise mit Silikon oder einem Elastomerwerkstoff beschichtetes Tuch verwendet, wobei im Einzelnen für die Herstellung der Bälge die Tücher streifenförmig zugeschnitten werden und endseitig die Tücher durch einzelne umlaufende Balgrahmen zusammengehalten werden. Dies ist seit langem bekannter Stand der Technik.

In jüngster Zeit ist an die Hersteller von Übergangseinrichtungen, insbesondere bei Omnibussen oder Schienenfahrzeugen immer wieder von den Verkehrbetrieben das Ansinnen herangetragen worden, innerhalb des Balges eines Überganges für mehr Helligkeit zu sorgen, wobei die gewünschte Helligkeit etwa der entsprechen soll, wie sie im übrigen Fahrzeug herrscht. Bekannt ist nun, dass Bälge, die zum Beispiel ein Gewebe aufweisen, das mit einem Kunststoff beschichtet ist, der Kunststoff im Wesentlichen lichtundurchlässig ist. Das heißt, im Bereich des Überganges findet eine unmittelbare Lichteinstrahlung statt. Insofern ist bereits in der DE 10204703 B4 ein lichtdurchlässiger Balg beschrieben.

In Verbindung mit transluzenten Bälgen ist aus der EP 2159084 A1 bei einem doppelt ausgebildeten Balg bekannt, den inneren Balg zumindest partiell aus einem lichtdurchlässigen (transluzenten) Material herzustellen, wobei hinter dem inneren Balg ein Leuchtmittel im Bereich des transluzenten Materials angeordnet ist, um auf diese Weise Licht in das Innere des Überganges zu bringen.

Die Verwendung von transluzentem Material zur Herstellung von Bälgen ist demzufolge durchaus bekannt. Üblicherweise ist der Festigkeitsträger, z. B. ein Gewebe, hierbei aus einem ungefärbten Material hergestellt. Die Beschichtung dieses Festigkeitsträgers, sei es ein Gewebe, ein Gestrick oder ein Gewirk, mit einem Kunststoff, z. B. einem Silikon, EPDM, TPU u.ä. ist nun derart, dass diese Beschichtung - obwohl farbig - auch zumindest transluzent ist. Einzelne Verkehrsbetriebe benutzen bestimmte Farben nicht nur zur Kennzeichnung der Fahrzeuge des jeweiligen Verkehrsbetriebes, wobei insofern der Balg eine dem Fahrzeug ähnliche Farbe aufweist, sondern auch, um den Balg signalfarben zu gestalten. Das heißt, es wird die Verwendung von kräftigen Farben als Signalfarben für die Balgbeschichtung gewünscht.

Es hat sich allerdings herausgestellt, dass in Abhängigkeit von der Farbe und dem gewünschten Grad an Einfärbung die Einfärbung Einfluss auf die Qualität der Beschichtung und somit auf die Qualität des Balges als solchen hat. Der Grund hierfür ist Folgender:
In Abhängigkeit von der Menge an zugegebener Farbe zu dem Beschichtungsmaterial verändert sich die Konsistenz des Beschichtungsmaterials im ausvulkanisierten Zustand. Das heißt, dass insbesondere bei einem hohen Farbanteil in dem Kunststoffgemisch, beispielsweise einem Silikon, die Elastizität des Silikons sich zum Teil drastisch verändert. Gleiches gilt in äquivalenter Weise auch für andere Elastomere, wie z. B. EPDM, bei denen die Hauptvalenzkette Kohlenstoffverbindungen aufweist. Die Folge hiervon ist, dass der Balg insgesamt wesentlich nachgiebiger wird, also an Steifigkeit verliert. Die Folge hiervon ist weiterhin, dass der Balg durchhängt, mit der weiteren Folge, dass gesonderte Maßnahmen getroffen werden müssen, um den Balg selbst zu stabilisieren, beispielsweise indem der Balg mittig durch einen Galgen zwischen den beiden Fahrzeugteilen gehalten wird.

Die der Erfindung zugrunde liegende Aufgabe besteht nunmehr darin, einen farbigen Balg zur Verfügung stellen zu können, wobei die Farbgestaltung keinen Einfluss auf die Festigkeit oder Steifigkeit des Balges insgesamt haben soll.

Es wurde nun überraschenderweise herausgefunden, dass dann, wenn der Festigkeitsträger die gewünschte Farbe aufweist, die beispielsweise der Farbe des Fahrzeuges selbst entspricht, und die Beschichtung aus einem glasfarbenen Kunststoff besteht, dass dies auch unter Beleuchtung beispielsweise durch die Sonne den Eindruck hervorruft, als ob das Balgmaterial insgesamt eingefärbt wäre. Der Kern der Erfindung besteht also darin, dass nun nicht mehr versucht wird durch Einfärbung des Beschichtungsmaterials des Festigkeitsträgers einen bestimmten farblichen Eindruck zu erwecken, sondern, dass man vielmehr nach der Erfindung dazu übergegangen ist, den Festigkeitsträger selbst einzufärben und die Beschichtung, die zu einer oder zu beiden Seiten des Festigkeitsträgers vorgenommen sein kann, transluzent "glasfarbig" auszugestalten. Die Beschichtung kann hierbei aus einem Elastomer beispielsweise einem PVC, einem CSM, EPDM, TPU oder auch einem Silikonkautschuk ausgebildet sein. Wesentlich ist ausschließlich, dass die Farbgestaltung durch den Festigkeitsträger selbst in Verbindung mit einer durchsichtigen Beschichtung erfolgt. Die Färbung des Festigkeitsträgers kann hierbei dadurch erfolgen, dass die Oberfläche der Fäden gefärbt ist, oder dadurch, dass die Fäden durchgefärbt sind.

Weiterhin wurde festgestellt, dass sich das farbliche Erscheinungsbild des Balges über die Zeit nicht wesentlich verändert, was insbesondere gilt, wenn der Faden des Festigkeitsträgers durchgefärbt ist. In diesem Zusammenhang sei darauf hingewiesen, dass sich bei dem Balg insbesondere im Hinblick auf die Kunststoffbeschichtung, und hier insbesondere dann, wenn als Beschichtungsmaterial ein PVC verwendet wird, in Abhängigkeit von der Intensität und Dauer der Sonneneinstrahlung farbliche Veränderungen ergeben. Dadurch, dass die farbgebende Schicht durch das Beschichtungsmaterial geschützt ist, bleibt selbst nach langer Zeit die farbliche Erscheinung im Wesentlichen gleich. Dies gilt selbst dann, wenn das Beschichtungsmaterial milchig wird.

In diesem Zusammenhang können die einzelnen Fäden des Festigkeitsträgers, z. B. ein Gewebe, unterschiedliche Farben aufweisen, um auf diese Weise Muster beim Weben oder bei einem Gestrick beim Stricken herzustellen. Denkbar sind hierbei Farbmuster, Textmuster, Verlaufsmuster oder auch Wasserzeichen.

Es sind auch reflektierende Einfärbungen für die Fäden oder von sich aus reflektierende Fäden nach einer besonderen Ausführungsform einsetzbar, wobei aus solchen Fäden hergestellte Festigkeitsträger durch die Reflexion des Sonnenlichts die Erwärmung des Innenraums des Fahrzeugs reduzieren.

## Patentansprüche

1. Balg eines Überganges zwischen zwei gelenkig miteinander verbundenen Fahrzeugen oder Balg eines Vordachs einer Fluggasttreppe oder Fluggastbrücke, wobei der Balg aus einem Tuchmaterial hergestellt ist, wobei das Tuchmaterial einen Festigkeitsträger z. B. ein Gewebe, Gewirk oder Gestrick aufweist, wobei der Festigkeitsträger auf zumindest einer Seite mit einem Kunststoff beschichtet ist,
**dadurch gekennzeichnet,**
**dass** der Festigkeitsträger eine Einfärbung aufweist, wobei die Beschichtung aus Kunststoff glasfarbig transluzent ist.

2. Balg nach Anspruch 1,
**dadurch gekennzeichnet,**
**dass** die Beschichtung beidseitig auf den Festigkeitsträger aufgebracht ist.

3. Balg nach einem der voranstehenden Ansprüche,
**dadurch gekennzeichnet,**
**dass** die Beschichtung einen EPDM, CSM, PVC, TPU oder ein Silikon aufweist.

4. Balg nach einem der voranstehenden Ansprüche,
**dadurch gekennzeichnet,**
**dass** der Festigkeitsträger einzelne Fäden aufweist, die unterschiedlich gefärbt sind.

5. Balg nach einem der voranstehenden Ansprüche,
**dadurch gekennzeichnet,**
**dass** die Fäden des Festigkeitsträgers durchgefärbt sind.

6. Balg nach einem der voranstehenden Ansprüche,
**dadurch gekennzeichnet,**
**dass** die Oberfläche der Fäden des Festigkeitsträgers eingefärbt ist.

7. Balg nach einem der voranstehenden Ansprüche,
**dadurch gekennzeichnet,**
**dass** die Fäden des Festigkeitsträgers reflektierend ausgebildet sind.
